# EUROPÄISCHE PATENTSCHRIFT

(11) **EP 3 211 651 B1**
(45) Veröffentlichungstag und Bekanntmachung des Hinweises auf die Patenterteilung: **23.01.2019**
(21) Anmeldenummer: 17155669.9
(22) Anmeldetag: 26.02.2015
(51) Int. Cl.: H01H 37/04, B60R 16/03, H01H 37/34, H01H 37/52, H01H 37/54

(54) **THERMISCHER SCHUTZSCHALTER**
THERMAL SAFETY SWITCH
INTERRUPTEUR THERMIQUE DE PROTECTION

(30) Priorität: 21.03.2014 DE 102014004106
(43) Veröffentlichungstag der Anmeldung: 30.08.2017
(62) Teilanmeldung aus: 15711652.6
(73) Patentinhaber: Ellenberger & Poensgen GmbH, 90518 Altdorf (DE)
(72) Erfinder: KOOPS, Dietmar, 90473 Nürnberg (DE); SCHNEIDER, Ewald, 91238 Offenhausen (DE); ULLERMANN, Wolfgang, 91126 Schwabach (DE)
(74) Vertreter: FDST Patentanwälte

(56) Entgegenhaltungen:
- EP-A2- 0 938 116
- DE-B3-102009 053 258
- FR-A- 1 362 441
- US-A- 3 537 052
- US-A- 4 876 523
- US-A1- 2005 057 336
- US-A1- 2010 149 698

## Beschreibung

Die Erfindung betrifft einen thermisch auslösender Schutzschalter zur Absicherung eines Verbrauchers, insbesondere eines auch als Bordnetz bezeichneten Fahrzeugstromnetzes, mit in einem Schaltergehäuse einem temperaturabhängigen Schaltwerk, das in Abhängigkeit dessen Temperatur eine elektrisch leitende Verbindung zwischen zwei auf gegenüber liegenden Gehäuseseiten aus dem Schaltergehäuse herausgeführten Außenanschlüssen herstellt. Ein derartiger thermisch auslösender Schutzschalter zum Schutz elektrischer Komponenten gegen Überstrom mit einem Schaltergehäuse und mit einem darin angeordneten temperaturabhängigen Schaltwerk ist beispielsweise aus der US 2005/0057336 A1 bekannt.

Die Absicherung eines Stromnetzes mit von diesem versorgten Verbrauchern eines Fahrzeug, insbesondere eines Personenkraftwagen (PKW) oder eines Nutzfahrzeugs, insbesondere eines Lastkraftwagens (LKW) oder Omnibusses, erfolgt üblicherweise mittels Sicherungen, Schutzschaltern oder Relais, welche in einer Sicherungsbox einer auch als Zentralelektrik bezeichneten Bordnetzelektronik mit entsprechenden Steckplätzen zentral angeordnet werden. Dies erfordert die Verlegung oder Führung von Kabeln oder Leitungen von den zu schützenden Verbrauchern, die praktisch an beliebigen Orten innerhalb des Fahrzeugs angeordnet sein können, zur Bordnetzelektronik. Als Kabel wird nachfolgend ein mit einem Isolierstoff ummantelter ein- oder mehradriger Verbund von Adern bezeichnet, welcher der Übertragung von Energie, insbesondere des dem jeweiligen Verbraucher zugeführten Nenn- oder Laststrom dient.

Das Verlegen der Kabel bzw. Leitungen und das Kabel-/Leitungsmaterial selbst stellen nicht nur einen Kostenfaktor dar, sondern führen auch zu einer entsprechenden Erhöhung des Fahrzeuggewichts. Dies wiederum ist insbesondere im Hinblick auf die angestrebte Reduzierung des Schadstoffausstoßes derartiger Fahrzeuge in Richtung einer Optimierung der C02-Bilanz unerwünscht.

Die bislang zur Absicherung des Strom- bzw. Bordnetzes und/oder zum Überstromschutz der Verbraucher eingesetzten Schutzschalter werden in Sockel einer Bordnetzelektronik bzw. in das Fahrzeugsteuergerät eingesteckt, wobei die Sockel einerseits zur (mechanischen) Fixierung der Schutzschalter und andererseits zu deren (elektrischer) Kontaktierung an das jeweilige Kabel dienen. Üblicherweise werden im Automobilbereich thermisch auslösende, selbstrückstellende Miniatur-Schutzschalter unter Verwendung eines bimetallischen Schaltwerkes in Verbindung mit einem PTC-Widerstand als Heizelement zur Offenhaltung der Schalterkontakte im Auslösefall eingesetzt, wie diese beispielsweis aus der DE 20 2009 010 473 U1 und aus der WO 2012/037991 A1 bekannt sind. US-A-3537052 offenbart ein Thermisch auslösender Schützschalter nach dem Oberbegriff des Anspruchs 1.

Zur Fixierung der Schutzschalter an die Kabel- oder Leiteradern werden vorzugsweise Federkontakte angecrimpt, die wiederum in die Sockel eingesteckt werden und dort verrasten. An diesen Federkontakten kontaktiert der jeweilige Schutzschalter mittels dessen Steckanschlüssen. Der Sockel dient zudem zur elektrischen Isolierung dieser Verbindung und muss im Kabel oder Kabelstrang separat befestigt, beispielsweise eingeclipst, werden.

Der Erfindung liegt die Aufgabe zugrunde, einen für ein Fahrzeugbordnetz besonders geeigneten und in ein solches besonders geeignet integrierbaren thermisch auslösenden Schutzschalter anzugeben.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Der zur Absicherung eines Verbrauchers eines Fahrzeugstromnetzes dienende, thermisch auslösende Schutzschalter weist in einem Schaltergehäuse ein temperaturabhängiges Schaltwerk auf, das in Abhängigkeit von dessen Temperatur eine elektrisch leitende Verbindung zwischen zwei Außenanschlüssen herstellt, die auf gegenüber liegenden Gehäuseseiten aus anschlussseitigen Gehäuseabschnitten des Schaltergehäuses herausgeführt sind. Die Außenanschlüsse sind zu einer elektrischen und mechanischen Anschlussverbindung mit den Kabelanschlussenden von jeweils einem Kabelabschnitten vorgesehen und eingerichtet, von denen ein Kabelabschnitt zu einem zu schützenden Verbraucher und der andere Kabelabschnitt zu einer Bordnetzelektronik führt. Das Schaltergehäuse des besonders vorteilhaft kabelintegrierbaren Schutzschalters weist mehrere Gehäuseabschnitte auf, wobei ein mittlerer Gehäuseabschnitt das schalterspezifische Schaltwerk umschließt, während die sich hieran beidseitig anschließenden Gehäuseaußenabschnitte zur Aufnahme der jeweiligen Anschlussverbindung dienen.

Die anschlussseitigen Gehäuseaußenabschnitte sind aus einem, z. B. halbschalenartigen, Gehäuseunterteil und einem dieses verschließenden, z. B. ebenfalls halbschalenförmigen, Gehäuseoberteil gebildet. Dabei ist das jeweilige Gehäuseoberteil an das entsprechende Gehäuseunterteil des anschlussseitigen Gehäuseaußenabschnitts schwenkbeweglich angebunden. Besonders geeignet ist hierbei die Ausbildung eines Filmscharniers zwischen dem Gehäuseoberteil und dem Gehäuseunterteil, zumal das Schaltergehäuse bzw. dessen Gehäuseaußenabschnitte zweckmäßigerweise aus einem insbesondere hinsichtlich möglichst guter Isoliereigenschaften und hoher Wärmebeständigkeit geeigneten Kunststoff, insbesondere im Spritzverfahren, hergestellt ist.

Die anschlussseitigen Gehäuseaußenabschnitte schließen sich an den mittleren Gehäuseabschnitt des Schaltergehäuses direkt, das heißt vorzugsweise einstückig an. Das im Nachgang zur Anschlusskontaktierung der Kabelenden mit den schutzschalterseitigen Außenanschlüssen erfolgende Verschließen der anschlussseitigen Gehäuseaußenabschnitte erfolgt geeigneterweise durch Rastverbindungen zwischen dem Gehäuseoberteil und dem Gehäuseunterteil auf der der Gelenk- oder Filmscharnierverbindung gegenüberliegenden Gehäuseseite.

Unter dem Begriff "Bordnetzelektronik" wird insbesondere auch ein Fahrzeugsteuergerät oder eine Bordnetzversorgung eines solchen Fahrzeugs verstanden. Des Weiteren wird unter dem Begriff "Kabel" auch eine einzelne Leitung mit einer eine Leiterader ummantelnden Leiterisolierung oder Anzahl derartiger Leiter verstanden die mit einer gemeinsamen Kabelisolierung ummantelt sind.

Die Erfindung geht dabei von der Überlegung aus, den Schutz des jeweiligen Verbrauchers möglichst nahe an diesen heranzuführen. Da sich ein solcher Schutz somit praktisch an beliebiger Stelle im Fahrzeug, z.B. auch an einer unzugänglichen Stellen befindet kann, ist der erfindungsgemäße Schutzschalter selbstrückstellend.

In vorteilhafter Ausgestaltung weist das Schaltwerk ein freiendseitig einen Bewegkontakt tragendes Bimetallelement und ein Heizelement in Form vorzugsweise eines PTC-Widerstandes auf, der am Bimetallelement anliegt und mittels eines Federelements an einem Festkontaktarm abgestützt ist. Ein vom Festkontaktarm getragener Festkontakt bildet zusammen mit dem Bewegkontakt die Schalterkontaktstelle des Schutzschalters.

Diesbezüglich kann gemäß der SAE Norm J553 grundsätzlich auf zwei Gerätetypen zurückgegriffen werden, bei denen das Gerät, d. h. der Schutzschalter nach einer Stromunterbrechung in Folge eines Überstroms nach einer bestimmten Zeit selbsttätig schließt (Typ I). Dabei beruht im Normalfall die Funktion auf dem Abkühlen eines Bimetalls nach der Öffnung, welches den Stromkreis dann wieder schließt. Ein Gerät (Schutzschalter) des Typs II hält den Stromkreis so lange im offenen Zustand, bis die (Versorgungs-) Spannung weggenommen wird, wobei ein Bimetall zur thermischen Auslösung nach dem Öffnungsvorgang durch ein Heizelement auf Temperatur gehalten wird, so dass der thermisch auslösende Schutzschalter den Schließvorgang erst nach dessen Abschalten, d. h. nach Wegnehmen der Spannung einleiten kann.

Der erfindungsgemäße Schutzschalter ist vorzugsweise ein solcher des Typs II unter Verwendung eines PTC-Widerstandes als Heizelement zur Offenhaltung. Vorteilhaft ist hierbei insbesondere der Umstand, dass einerseits die Temperatur im Überlastfall in einem die Verwendung eines aus einem Kunststoff bestehenden Schaltergehäuses ermöglichenden Bereich verbleibt, und dass andererseits eine Überhitzung im Kabel (Kabelstrang) vermieden wird, in welches der Schutzschalter erfindungsgemäß integriert ist. Zudem handelt es sich bei dem erfindungsgemäß im Montagezustand in ein Kabel, insbesondere in ein Bordnetzkabel eines Fahrzeugs, integrierten Schutzschalter um einen solchen in Miniaturbauweise oder -ausführung. Darunter werden Gehäuseabmessungen des Schaltergehäuses mit Längen von etwa 10mm bis 25mm, Breiten von etwa 5mm bis 10mm und Höhen von etwa 15mm bis 25mm verstanden. Dabei ist ein rechteckförmiges Schaltergehäuse in Flachbauweise mit an den in Gehäuselängsrichtung einander gegenüberliegenden Schmalseiten herausgeführten Anschlüssen besonders geeignet und bevorzugt.

Zweckmäßigerweise sind die Anschlussverbindungen des Schutzschalters mit den Kabelanschlussenden bzw. den darin geführten Leitungsadern als schraubenlose Verbindungen ausgebildet. Geeignet sind hierbei Klemmverbindungen oder auch Schneidklemmverbindungen. Die Ausführung der Außenanschlüsse des Schutzschalters als Schneidklemmen erspart den Montageschritt des Abisolierens der Kabel- bzw. Leiteradern. Bei Verwendung von zweischneidig ausgeführten Schneidklemmen besteht zudem die Möglichkeit, beide Schneiden für die elektrische Kontaktierung zu verwenden, oder eine der Schneiden als Zugentlastung auszubilden.

Während die Außenanschlüsse des Schutzschalters auch als Federkontakte oder Doppelfederkontakte ausgeführt sein können, sind Crimpverbindungen besonders vorteilhaft. Diesbezüglich ist eine weitere Einsparung ermöglicht, wenn der jeweilige Außenanschluss des Schutzschalters direkt als Flachsteckhülse mit angeformten Crimpschaft ausgeführt ist. Dieser Crimpschaft weist zusätzlich zu den Ader- oder Drahtcrimpfasen freiendseitig Zugentlastungsfasen auf, welche im Zuge des Crimpvorgangs die Kabel- oder Leiterisolierung umschließen, die hierbei infolge des Verpressvorgangs in einem üblicherweise vorbestimmten Ausmaß verformt werden.

Die Ausbildung des thermisch auslösenden Schutzschalters zu dessen Integration in ein Kabel, insbesondere in ein Bordnetzkabel eines Fahrzeugs, ermöglicht zusätzlich zu den genannten, vorzugsweise schraubenlosen Anschlussvarianten des Weiteren die Ausbildung der Außenanschlüsse als Federzugklemmen, beispielsweise nach Art einer sogenannten Käfigzugfeder. Der Vorteil derartiger Federzugklemmen ist einerseits deren einfache Handhabung bei der Anschlussverbindung des abisolierten Kabel- bzw. Leiterendes sowie andererseits deren zuverlässige elektrische und mechanische Anschlusskontaktierung. Insbesondere im Falle der Verwendung einer Feder- oder Käfigzugfeder als Anschlusselement ist zudem ein manuell einfach handhabbares Lösen der Anschlussverbindung ermöglicht.

Grundsätzlich denkbar ist auch eine direkte Schweißverbindung des Schutzschalters mit den Kabelanschlussenden bzw. deren Leiteradern im Bereich der Außenanschlüsse des Schutzschalters, beispielsweise mittels Ultraschallschweißen.

Nachfolgend werden Ausführungsbeispiele der Erfindung anhand einer Zeichnung näher erläutert. Darin zeigen:
- Fig. 1: schematisch im Längsschnitt einen thermisch auslösenden Schutzschalter mit einem thermisch auslösenden Schaltwerk und sich in Schalterlängsrichtung diametral erstreckenden Außenanschlüssen in deren Kontaktverbindung mit Kabelanschlussenden (Kabelenden) von zu einer Bordnetzelektronik einerseits und zu einem Verbraucher andererseits führenden Kabelabschnitten,
- Fig. 2: den in ein Kabel integrierbaren thermischen Schutzschalter gemäß Fig. 1 in Flach- und Miniaturbauweise mit dessen diametralen Außenanschlüssen in Draufsicht,
- Fig. 3: in einer Darstellung gemäß Fig. 2 den Schutzschalter mit als Crimpverbindung ausgebildeten Anschlussverbindung der Kabelenden,
- Fig. 4: ausschnittsweise in perspektivischer Darstellung einen der Außenanschlüsse des Schutzschalters in dessen Ausgestaltung als direkter Crimpanschluss,
- Fig. 5: in einer Darstellung gemäß Fig. 4 die Anschlussausgestaltung als Federkontakt,
- Fig. 6: die Anschlussausgestaltung als Käfigzugfeder,
- Fig. 7: die Anschlussausgestaltung als Federzugklemme,
- Fig. 8: die Anschlussausgestaltung als zweischneidige Schneidklemme,
- Fig. 9: in perspektivischer Darstellung den in das Kabel integrierten Schutzschalter mit einem aus drei Gehäuseabschnitten gebildeten Schaltergehäuse,
- Fig. 10: in perspektivischer Darstellung den kabelintegrierten Schutzschalter mit geöffneten anschlussseitigen Gehäuseabschnitten und geschlossenem mittleren Gehäuseabschnitt,
- Fig. 11: die Anordnung gemäß Fig. 10 mit geschlossenen anschlussseitigen Gehäuseabschnitten,
- Fig. 12: ausschnittsweise einen der anschlussseitigen Gehäuseabschnitte gemäß einer Variante mit in einem geschlossenen und einem geöffneten Gehäusebereich, und
- Fig. 13: die anschlussseitige Gehäuseausbildung gemäß Fig. 12 im Längsschnitt mit einer Primärverrastung des Kabelanschlussendes sowie mit einer Sekundärverriegelung bei geschlossenem Gehäuseteil zur Zugentlastung.

Einander entsprechende Teile sind in allen Figuren mit den gleichen Bezugszeichen versehen.

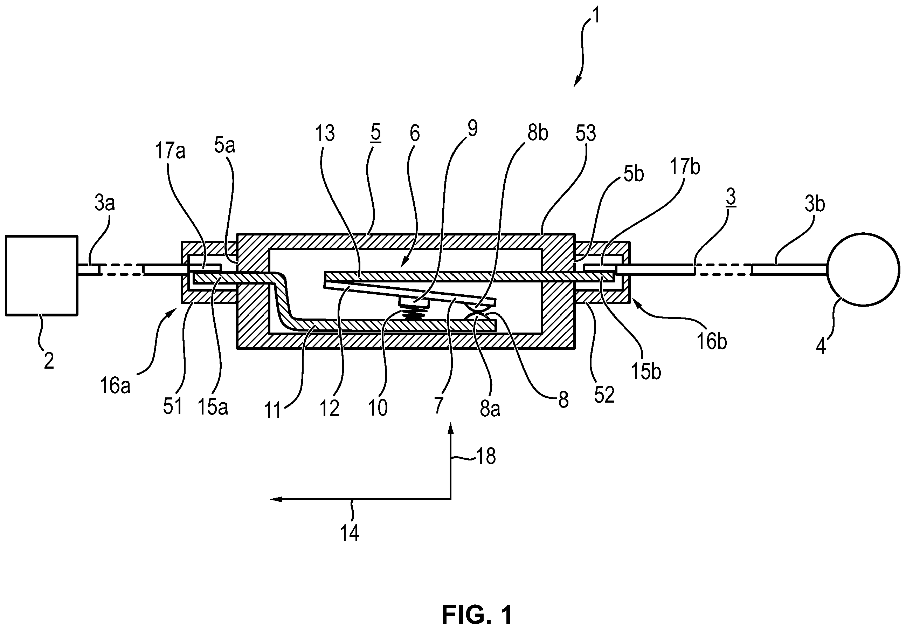

Fig. 1 zeigt schematisch einen kabelintegrierbaren thermisch auslösenden Schutzschalter 1 in dessen elektrisch kontaktierter und mechanischer Verbindung mit einem zu einer Bordnetzelektronik 2 eines Kraftfahrzeugs führenden (ersten) Kabelanschnitt 3a und einen zweiten Kabelabschnitt 3b eines Bordnetzkabels oder Kabelstrangs 3, das bzw. der an eine elektrische Last oder einen elektrischen Verbraucher 4 führt. Der erste Kabelabschnitt 3a wird nachfolgend als steuer- oder versorgungsseitiger Kabelabschnitt und der zweite Kabelabschnitt 3b als last- oder verbraucherseitiger Kabelabschnitt bezeichnet.

Bei dem Verbraucher 4 kann es sich beispielsweise um einen elektromotorischen Stellantrieb oder einen anderen üblichen elektrischen Verbraucher eines Fahrzeugs (PKW, LKW) handeln.

Der thermische, d.h. thermisch auslösende Schutzschalter 1 umfasst ein Schaltergehäuse 5, das geeigneterweise in möglichst flacher Bauweise ausgeführt ist. Der dadurch miniaturisierter Schutzschalter 1 ist geeigneterweise selbstrückstellend ausgeführt und enthält hierzu gehäuseintern ein Schaltwerk 6 mit einem beispielsweise streifenförmigen Bimetallelement 7 und einer Schalterkontaktstelle 8 sowie ein Heizelement 9 in Form eines PTC-Widerstandes, der am Bimetallelement 7 anliegt und mittels eines Federelements 10 an einem Festkontaktarm 11 abgestützt ist, der freiendseitig einen Festkontakt 8a trägt. Das Bimetall 7 trägt freiendseitig einen Bewegkontakt 8b, der zusammen mit dem Festkontakter 8a die in Schließstellung dargestellte Kontaktstelle 8 des Schutzschalters 1 bildet. Das Bimetallelement 7 ist mit dessen der Kontaktstelle 8 gegenüberliegenden Bimetallende 12 mit einem Bewegkontaktarm 13 elektrisch und mechanisch verbunden.

Der Festkontaktarm 11 und der Bewegkontaktarm 13 sind als Flachkontakte sowie geeigneterweise stromschienenartig und hierzu zweckmäßig als Stanzbiegeteil ausgeführt. Die Kontaktarme 11 und 13 sind endseitig auf in Gehäuselängsrichtung 14 auf gegenüberliegenden Gehäuseschmalseiten 5a bzw. 5b aus dem Schaltergehäuse 5 herausgeführt und bilden dort Außenanschlüsse 15a, 15b. Diese sind zu elektrischen und mechanischen Anschlussverbindungen 16a bzw. 16b mit Kabelanschlussenden 17a, 17b des versorgungsseitigen Kabelabschnitts 3a bzw. des lastseitigen Kabelabschnitts 3b vorgesehen und eingerichtet. Die Anschlussverbindungen 16a, 16b befinden sich geeigneterweise in anschlussseitigen Gehäuseabschnitten 51 bzw. 52 des hierzu vorzugsweise aus diesen und einem mittleren Gehäuseabschnitt 53 insbesondere als Kunststoffspritzteil ausgeführten Schaltergehäuses 5.

Die Funktionsweise des thermischen Schutzschalters 1 entspricht praktisch derjenigen eines an sich aus der WO 2012/037991 A1 bekannten thermisch auslösenden Schutzschalters, indem im Falle eines Überstroms dieser in der Schließstellung der Kontaktstelle 8 über das Bimetallelement 7 fließt und dieses mit der Folge dessen Ausbiegung in Auslöserichtung 18 ausbiegt. Hierdurch wird der Bewegkontakt 8b vom Festkontakt 8a abgehoben und dabei in Richtung des Bewegkontaktarms 13 verschwenkt. Die dadurch bedingte Stromunterbrechung, das heißt die Unterbrechung des über die Kontaktstelle 8 im Schließzustand deren Kontakte 8a, 8b geschlossenen Stromkreises würde zu einem Abkühlen des Bimetallelements 7 und demzufolge zum erneuten Schließen der Kontaktstelle 8 führen. Um dies zu verhindern, ist das geeigneterweise hochohmig ausgelegte Heizelement 9 auch bei geöffneter Kontaktstelle 8 mit den stromschienenartigen Kontaktearmen 11, 13 elektrisch leitend verbunden und somit bestromt. Infolge der daraus resultierenden Wärmeentwicklung ist eine zum erneuten Schließen der Kontaktstelle 8 ausreichende Abkühlung des Bimetallelements 7 verhindert. Das Federelement 10 dient dabei im Wesentlichen zur Aufbringung einer ausreichenden Anpresskraft des als PTC-Widerstand ausgeführten Heizelements 9 an das Bimetallelement 7.

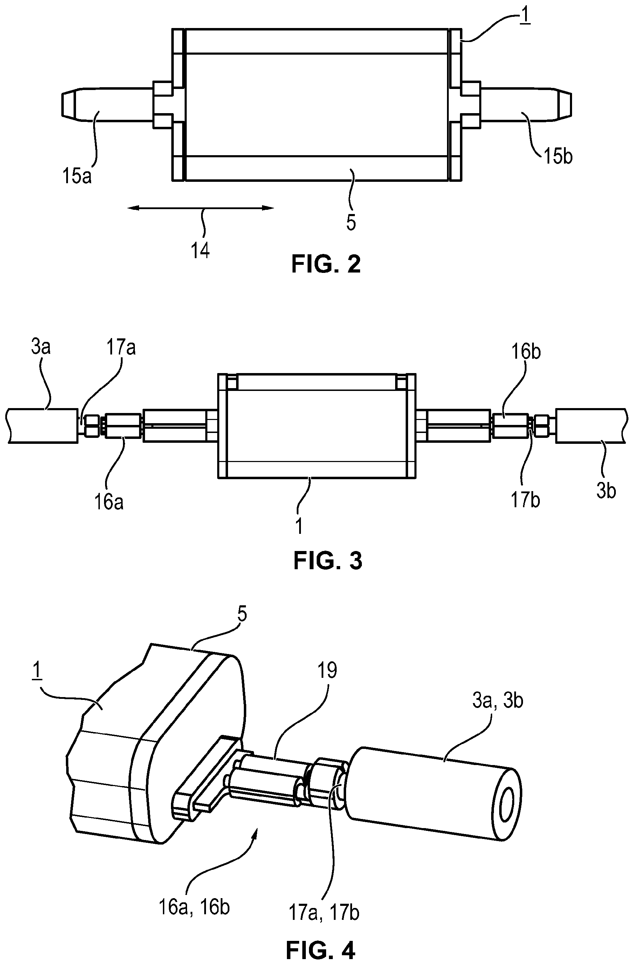

Fig. 2 zeigt zudem den Schutzschalter 1 in einer Draufsicht mit in Schalterlängsrichtung 14 sich diametral erstreckenden Außenanschlüssen 15a und 15b. Die Anschlussverbindungen 16a, 16b des Schutzschalters 1 mit den Kabelabschnitten 3a bzw. 3b des Kabels 3 bzw. mit dessen Kabelanschlussenden 17a, 17b - und diesbezüglich mit deren Kabel- oder Leiteradern - erfolgt geeigneterweise schraubenlos. Hierzu sind in den Fig. 3 bis 8 mehrere Varianten zweckmäßiger Anschlussverbindungen veranschaulicht.

Bei den Ausführungsformen nach den Fig. 3 und 4 sind die Anschlussverbindungen 16a, 16b zwischen den Außenanschlüssen 15a, 15b des Schutzschalters 1 und den Kabelanschlussenden 17a bzw. 17b als Crimpverbindungen ausgeführt. Bei der Ausführungsform nach Fig. 4 ist eine entsprechende Crimphülse 19 geeigneterweise bereits direkt am entsprechenden Außenanschluss 15a, 15b des Schutzschalters 1 kontaktierend montiert. Auch kann der entsprechende Außenanschluss 15a, 15b bereits als eine solche Crimphülse 19 ausgeführt sein.

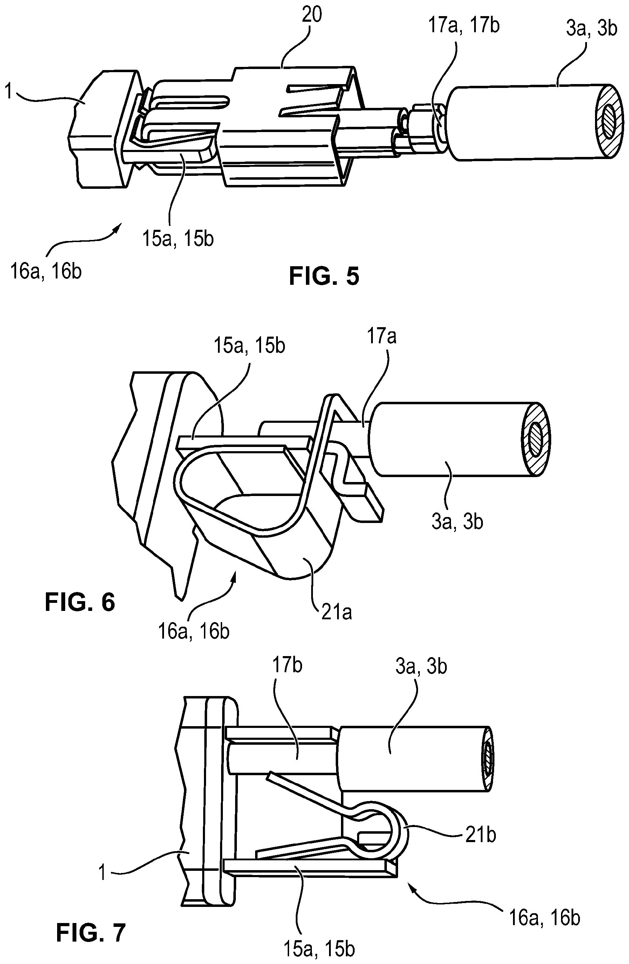

Bei der Ausführungsform nach Fig. 5 ist die jeweilige Anschlussverbindung 16a, 16b als Doppelfederkontakt mit einem entsprechenden Federanschluss 20 ausgeführt, der geeigneterweise wiederum mittels Crimpverbindung am entsprechenden Kabelanschlussende 3a, 3b mechanisch und elektrisch leitend angeschlossen ist.

Die Fig. 6 und 7 zeigen als Federzugklemmen ausgeführte Anschlussverbindungen 16a, 16b, wobei bei der Ausführungsform gemäß Fig. 6 eine Käfigzugfeder 21a und bei der Ausführungsform gemäß Fig. 7 eine sogenannte Push-In-Feder 21b vorgesehen ist. In den Fig. 6 und 7 vergleichsweise deutlich erkennbar sind die abisolierten Leiteradern der Kabelanschlussenden 17a, 17b der Kabelabschnitte 3a bzw. 3b.

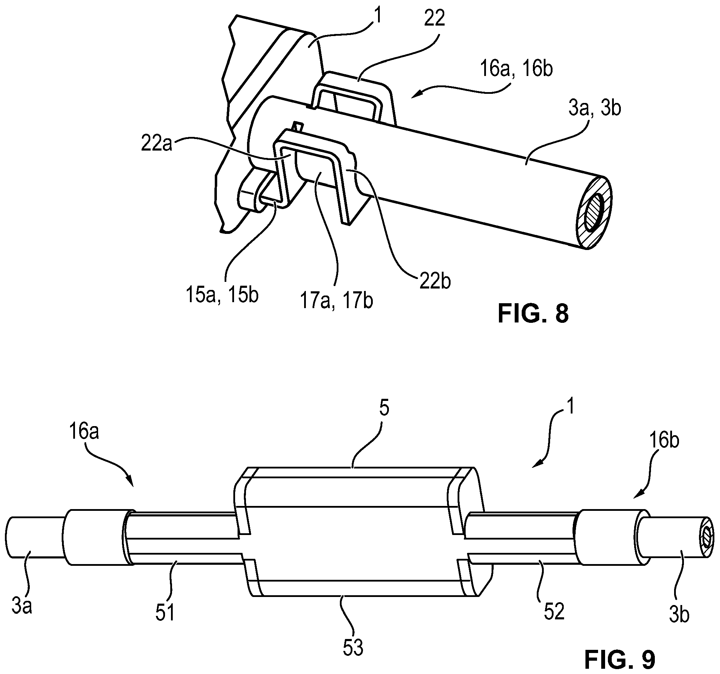

Fig. 8 zeigt eine Anschlussvariante der Anschlussverbindungen 16a, 16b mit doppelschneidigem Schneidklemmkontakt 22. Dabei können beide Schneiden 22a, 22b des Schneidklemmkontakts 22 zur elektrischen Kontaktierung oder eine der beiden Schneiden 22a, 22b als reine Zugentlastung dienen.

Die Fig. 9 bis 11 zeigen Ausführungsformen des aus den anschlussseitigen Gehäuseabschnitten 51 und 52 sowie dem mittleren Gehäuseabschnitt 53 gebildeten Schaltergehäuse 5 des thermischen Schutzschalters 1. Bei der Ausführungsform nach Fig. 9 sind die anschlussseitigen Gehäuseabschnitte 51, 52 als geschlossene Gehäuseteile ausgeführt, in welchen die schalterseitigen Außenanschlüsse 15a, 15b angeordnet und die Anschlussverbindungen 16a, 16b mit den Kabelanschlussenden 17a bzw. 17b hergestellt werden.

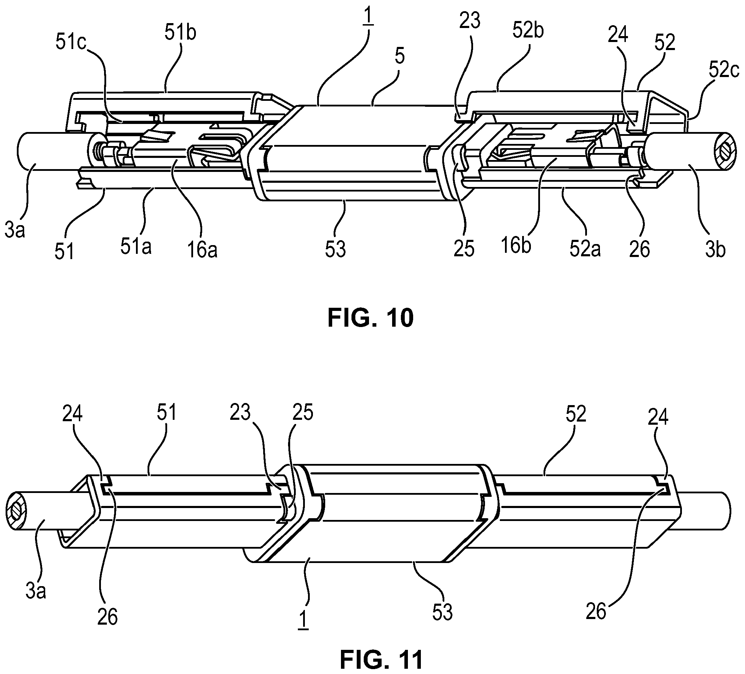

Die Ausführungsformen nach den Fig. 10 und 11 zeigen in geöffnetem bzw. geschlossenem Zustand zweiteilige anschlussseitige Gehäuseabschnitte 51, 52 mit einem mit dem mittleren Gehäuseabschnitt 53 des Schaltergehäuses 5 fest verbundenen Gehäuseunterteilen 51a, 52a und mit einem daran über ein Filmscharnier 51c, 52c angelenkten Gehäuseoberteil 51b bzw. 52b. Bei der gezeigten Ausführungsform sind die Anschlussverbindungen 16a, 16b entsprechend der Variante nach Fig. 5 als Doppelfederkontakte ausgeführt.

An die Gehäuseoberteile 51b, 52b der anschlussseitigen Gehäuseabschnitte 51, 52 sind Rastelemente 23, 24 angeformt, die mit an das jeweilige Gehäuseunterteil 51a, 52a angeformten korrespondierenden Rastelementen 25 bzw. 26 unter Ausbildung von Hinterschneidungen verrasten.

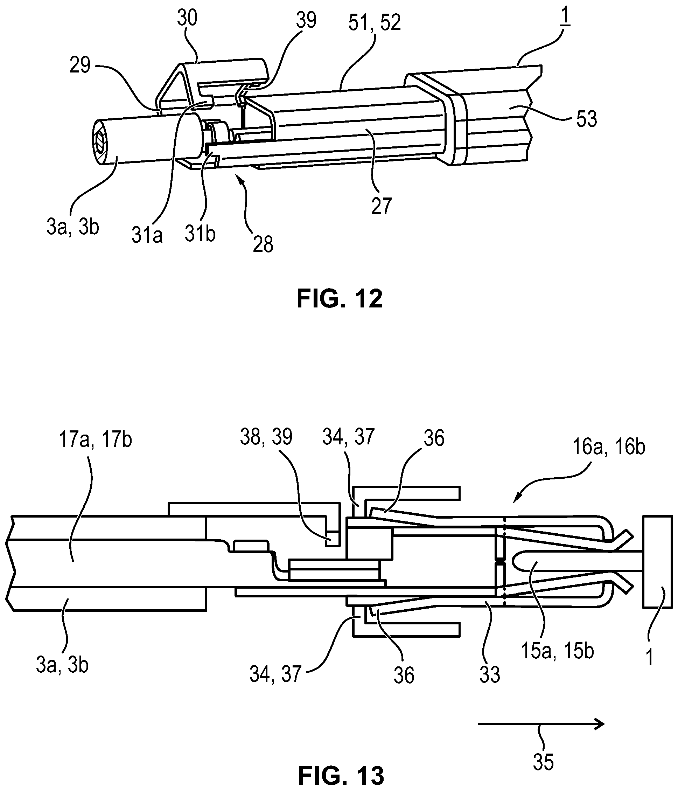

Die Fig. 12 und 13 zeigen in perspektivischer Ansicht bzw. in einem Längsschnitt einen im Anschlussbereich unterteilten anschlussseitigen Gehäuseabschnitt 51, 52 mit einem geschlossenen Gehäusebereich 27 und einem verschließbaren Gehäusebereich 28, der wiederum ein über ein Filmscharnier 29 angelenktes Deckelteil 30 aufweist. Kabelseitige Rastelemente 31a, 31b am Deckelteil 30 bzw. einem unterseitigen Gehäuseabschnittsbereich 32 ermöglichen wiederum ein zuverlässiges Verschließen des offenen Gehäusebereichs 28 mittels Rastverbindung, in der das deckelseitige Rastelemente 31a das gehäuseunterseitige Rastelement 31b hinterschneidet.

Wie aus Fig. 13 vergleichsweise deutlich ersichtlich ist, ist im Ausführungsbeispiel die Anschlussverbindung 16a, 16b wiederum als Doppelfederkontakt ausgeführt. Bei noch geöffnetem Deckelteil 30 wird die Anschlussverbindung 16a, 16b durch Ein- oder Aufstecken eines entsprechenden Federkontakts 33 auf den jeweiligen Außenanschluss 15a, 15b hergestellt. Dabei wird die Anschlussverbindung 16a, 16b mittels einer Primärverrastung 34 fixiert, indem entgegen der Steckrichtung 35 aufgestellte Federzungen 36 des Federkontakts 33 gehäuseseitige Verriegelungskonturen 37 hintergreifen. Zusätzlich ist eine Sekundärverriegelung 38 zur Zugentlastung des jeweiligen Kabelabschnitts 3a, 3b vorgesehen. Diese ist durch eine entsprechende Verriegelungskontur 39 (Fig. 12) am Deckelteil (deckelseitigen Gehäuseteil) 30 gebildet, die einwärts zur jeweiligen Anschlussverbindung 16a, 16b hin gerichtet deckelinnenseitig angeformt ist.

Durch die praktisch stromlinienförmig ausgeführte Geometrie und die relativ geringe Masse des thermischen Schutzschalters 1 ist es ermöglicht, diesen ohne separate Befestigung direkt in den Kabelstrang bzw. in das Bordnetzkabel 3 elektrisch kontaktierend sowie mechanisch zuverlässig befestigungsstabil einzubinden und somit in das Kabel 3 besonders raumsparend zu integrieren.

Die Erfindung ist nicht auf die vorstehend beschriebenen Ausführungsbeispiele beschränkt. Beispielsweise können die Anschlussverbindungen 16a, 16b mit den beiden Außenanschlüssen 15a bzw. 15b des thermischen Schutzschalters 1 als unterschiedliche schraubenlose Steckverbindungen gemäß den Varianten nach den Fig. 3 bis 8 ausgeführt sein. Auch kann nur einer der anschlussseitigen Gehäuseabschnitte 51, 52 des Schaltergehäuses 5 verschließbar (Fig. 10) oder teilverschließbar (Fig. 12) ausgeführt sein, während der gegenüberliegende anschlussseitige Gehäuseabschnitt 52 bzw. 51 geschlossen ausgeführt sein kann. Des Weiteren kann die versorgungsseitige Anschlussverbindung 16a und/oder die lastseitige Anschlussverbindung 16b als Schweißverbindung ausgeführt sein.

### Bezugszeichenliste

- 1: Thermischer Schutzschalter
- 2: Bordnetz-Elektronik
- 3: Kabelstrang / Bordnetzkabel
- 3a: Versorgungsseitiger Kabelabschnitt
- 3b: Verbraucherseitiger Kabelabschnitt
- 4: Verbraucher
- 5: Schaltergehäuse
- 5a, b: Gehäuseschmalseite
- 6: Schaltwerk
- 7: Bimetallelement
- 8: Schalter / Kontaktstelle
- 8a: Festkontakt
- 8b: Bewegkontakt
- 9: Heizelement
- 10: Federelement
- 11: Festkontaktarm
- 12: Bimetallende
- 13: Bewegkontaktarm
- 14: Gehäuselängsrichtung
- 15a, b: Außenanschluss
- 16a, b: Anschlussverbindung
- 17a, b: Kabelanschlussende
- 18: Auslöserichtung
- 19: Crimphülse
- 20: Federanschluss
- 21a: Käfigzugfeder
- 21b: Push-In-Feder
- 22: Schneidklemmkontakt
- 22a, b: Schneide
- 23, 24: Rastelement
- 25, 26: Rastelement
- 27: Geschlossener Gehäusebereich
- 28: Verschließbarer Gehäusebereich
- 29: Filmscharnier
- 30: Deckelteil
- 31a, b: Rastelement
- 32: Gehäuseabschnittsbereich
- 33: Federkontakt
- 34: Primärverrastung
- 35: Steckrichtung
- 36: Federzunge
- 37: Verriegelungskontur

- 51, 52: Anschlussseitiger Gehäuseabschnitt
- 53: Mittlerer Gehäuseabschnitt

## Patentansprüche

1. Thermisch auslösender Schutzschalter (1) zur Absicherung eines Verbrauchers (4) im Falle eines Überstroms, aufweisend
- ein Schaltergehäuse (5), und
- ein temperaturabhängiges Schaltwerk (6), das in Abhängigkeit von dessen Temperatur eine elektrisch leitende Verbindung zwischen zwei Anschlüssen (15a, 15b) herstellt, wobei ein mittlerer Gehäuseabschnitt (53) des Schaltergehäuses (5) das Schaltwerk (6) umschließt,
**dadurch gekennzeichnet,**
- **dass** die Anschlüsse Aussenanschlüsse (15a,15b) sind die auf gegenüber liegenden Gehäuseschmalseiten des Schaltergehäuses (5) aus diesem herausgeführt sind, wobei das Schaltergehäuse (5) beidseitig des mittleren Gehäuseabschnitts (53) jeweils einen Gehäuseaußenabschnitt (51, 52) aufweist, der zur Aufnahme der jeweiligen Anschlussverbindung (16a, 16b) vorgesehen und eingerichtet ist, wobei die Außenanschlüsse (15a, 15b) aus den Gehäuseaußenabschnitten (51, 52) herausgeführt sind,
- **dass** die Außenanschlüsse (15a, 15b) zur elektrischen und mechanischen Anschlussverbindung (16a, 16b) mit den Kabelanschlussenden (17a, 17b) eines zum zu schützenden Verbraucher (4) eines Fahrzeugstromnetzes führenden Kabelabschnitts (3b) und eines zu einer Bordnetzelektronik (2) führenden Kabelabschnitts (3a) vorgesehen und eingerichtet sind, und
- **dass** der oder jeder anschlussseitige Gehäuseaußenabschnitt (51, 52) aus einem Gehäuseunterteil (51a, 52a) und einem dieses verschließenden Gehäuseoberteil (51b, 52b) gebildet ist, das schwenkbeweglich an das Gehäuseunterteil (51a, 52a) angelenkt ist.

2. Thermisch auslösender Schutzschalter (1) nach Anspruch 1,
**dadurch gekennzeichnet,**
**dass** das Gehäuseoberteil (51b, 52b) des jeweiligen Gehäuseaußenabschnitt (51, 52) über ein Filmscharnier (52c, 29) an das Gehäuseunterteil (51a, 52a) angelenkt ist.

3. Thermisch auslösender Schutzschalter (1) nach Anspruch 1 oder 2,
**dadurch gekennzeichnet,**
**dass** der oder jeder anschlussseitige Gehäuseabschnitt (51, 52) Mittel (37) zur Herstellung einer Primärverrastung (34) der jeweiligen Anschlussverbindung (16a, 16b) aufweisen.

4. Thermisch auslösender Schutzschalter (1) nach einem der Ansprüche 1 bis 3,
**dadurch gekennzeichnet,**
**dass** der oder jeder anschlussseitige Gehäuseabschnitt (51, 52) Mittel (39) zur Herstellung einer Sekundärverriegelung (38) der jeweiligen Anschlussverbindung (16a, 16b), insbesondere zur Zugentlastung des jeweiligen Kabelabschnitts (3a, 3b), aufweisen.

5. Thermisch auslösender Schutzschalter (1) nach einem der Ansprüche 1 bis 4,
**dadurch gekennzeichnet,**
**dass** die Anschlussverbindungen (16a, 16b) mit den Kabelanschlussenden (17a, 17b) als schraubenlose Verbindungen ausgebildet sind.

6. Thermisch auslösender Schutzschalter (1) nach einem der Ansprüche 1 bis 5,
**dadurch gekennzeichnet,**
**dass** die Außenanschlüsse (15a, 15b) als Crimpanschlüsse zur Crimpverbindung der Kabelanschlussenden (17a, 17b) ausgebildet sind.

7. Thermisch auslösender Schutzschalter (1) nach einem der Ansprüche 1 bis 6,
**dadurch gekennzeichnet,**
**dass** das Schaltwerk (6) ein freiendseitig einen Bewegkontakt (8b) tragendes Bimetallelement (7) und eine Schalterkontaktstelle (8) sowie ein Heizelement (9) in Form eines PTC-Widerstandes aufweist, der am Bimetallelement (7) anliegt und mittels eines Federelements (10) an einem Festkontaktarm (11) abgestützt ist, der einen zusammen mit dem Bewegkontakt (8b) die Schalterkontaktstelle (8) bildenden Festkontakt (8a) trägt.

## Claims

1. Thermally tripped circuit breaker (1) for protecting a load (4) in the event of an overcurrent, having
- a breaker housing (5), and
- a temperature-dependent switching mechanism (6) which, depending on its temperature, establishes an electrically conductive connection between two terminals (15a, 15b), wherein a central housing section (53) of the breaker housing (5) encloses the switching mechanism (6),
**characterized**
- **in that** the terminals are external terminals (15a, 15b) which are routed out of the breaker housing (5) on opposite housing narrow sides of the said breaker housing, wherein the breaker housing (5) has in each case one housing outer section (51, 52) on either side of the central housing section (53), the said housing section being provided and designed for receiving the respective terminal connection (16a, 16b), wherein the external terminals (15a, 15b) are routed out of the housing outer sections (51, 52),
- **in that** the external terminals (15a, 15b) are provided and designed to form an electrical and mechanical connection (16a, 16b) with the cable terminal ends (17a, 17b) of a cable section (3b) which leads to the load (4) to be protected of a vehicle power supply system and of a cable section (3a) which leads to on-board system electronics (2), and
- **in that** the or each terminal-side housing outer section (51, 52) is formed from a housing lower part (51a, 52a) and a housing upper part (51b, 52b) which closes the said housing lower part and is connected in an articulated manner to the housing lower part (51a, 52a) in a pivotable manner.

2. Thermally tripped circuit breaker (1) according to Claim 1,
**characterized**
**in that** the housing upper part (51b, 52b) of the respective housing outer section (51, 52) is connected in an articulated manner to the housing lower part (51a, 52a) by means of a film hinge (52c, 29).

3. Thermally tripped circuit breaker (1) according to Claim 1 or 2,
**characterized**
**in that** the or each terminal-side housing section (51, 52) has means (37) for producing a primary latching arrangement (34) of the respective terminal connection (16a, 16b).

4. Thermally tripped circuit breaker (1) according to one of Claims 1 to 3,
**characterized**
**in that** the or each terminal-side housing section (51, 52) has means (39) for producing a secondary locking arrangement (38) of the respective terminal connection (16a, 16b), in particular for strain relief of the respective cable section (3a, 3b).

5. Thermally tripped circuit breaker (1) according to one of Claims 1 to 4,
**characterized**
**in that** the terminal connections (16a, 16b) to the cable terminal ends (17a, 17b) are designed as screw-free connections.

6. Thermally tripped circuit breaker (1) according to one of Claims 1 to 5,
**characterized**
**in that** the external terminals (15a, 15b) are designed as crimp connections for crimp connection of the cable terminal ends (17a, 17b).

7. Thermally tripped circuit breaker (1) according to one of Claims 1 to 6,
**characterized**
**in that** the switching mechanism (6) has a bimetallic element (7), which is fitted with a moving contact (8b) at the free end side, and a breaker contact point (8) and also a heating element (9) in the form of a PTC thermistor which bears against the bimetallic element (7) and is supported, by means of a spring element (10), on a fixed contact arm (11) which is fitted with a fixed contact (8a) which, together with the moving contact (8b), forms the breaker contact point (8).

## Revendications

1. Disjoncteur à déclenchement thermique (1) destiné à protéger un consommateur (4) en cas de surintensité, comportant
- un boîtier de commutateur (5), et
- un mécanisme de commutation (6) dépendant de la température, qui établit une liaison électriquement conductrice entre deux raccords (15a, 15b) en fonction de sa température, dans lequel une partie centrale de boîtier (53) du boîtier de commutateur (5) entoure le mécanisme de commutation (6), **caractérisé**
- **en ce que** les raccords sont des raccords externes (15a, 15b) qui sont guidés hors du boîtier de commutateur (5) par des côtés étroits opposés du boîtier, dans lequel le boîtier de commutateur (5) présente de part et d'autre de la partie centrale de boîtier (53) une partie extérieure de boîtier (51, 52) qui est prévue et configurée pour recevoir la liaison de raccordement (16a, 16b) respective, dans lequel les raccords extérieurs (15a, 15b) sont guidés hors des parties extérieures de boîtier (51, 52),
- **en ce que** les raccords externes (15a, 15b) sont prévus et configurés pour une liaison électrique et mécanique (16a, 16b) avec les extrémités de raccordement de câbles (17a, 17b) d'un tronçon de câble (3b) menant au consommateur à protéger (4) d'un réseau embarqué et d'un tronçon de câble (3a) menant à une électronique embarquée (2), et
- **en ce que** la ou chaque partie extérieure de boîtier (51, 52) côté raccordement est formée d'une partie inférieure de boîtier (51a, 52a) et d'une partie supérieure de boîtier (51b, 52b) qui ferme celle-ci et est articulée de manière mobile en pivotement sur la partie inférieure de boîtier (51a, 52a).

2. Disjoncteur à déclenchement thermique (1) selon la revendication 1,
**caractérisé en ce que** la partie supérieure de boîtier (51b, 52b) de la partie extérieure de boîtier (51, 52) respective est articulée sur la partie inférieure de boîtier (51a, 52a) par l'intermédiaire d'une charnière à film (52c, 29).

3. Disjoncteur à déclenchement thermique (1) selon la revendication 1 ou 2,
**caractérisé en ce que** la ou chaque partie de boîtier côté raccordement (51, 52) présente des moyens (37) destinés à produire un verrouillage primaire (34) de la liaison de raccordement (16a, 16b) respective.

4. Disjoncteur à déclenchement thermique (1) selon l'une des revendications 1 à 3,
**caractérisé en ce que** la ou chaque partie de boîtier côté raccordement (51, 52) présente des moyens (39) destinés à produire un verrouillage secondaire (38) de la liaison de raccordement (16a, 16b) respective, notamment pour la décharge de traction du tronçon de câble (3a, 3b) respectif.

5. Disjoncteur à déclenchement thermique (1) selon l'une des revendications 1 à 4,
**caractérisé en ce que** les liaisons de raccordement (16a, 16b) en association avec les extrémités de raccordement de câbles (17a, 17b) sont réalisées sous la forme de liaisons sans vis.

6. Disjoncteur à déclenchement thermique (1) selon l'une des revendications 1 à 5,
**caractérisé en ce que** les raccords externes (15a, 15b) sont réalisés sous la forme de raccords à sertir pour le sertissage des extrémités de raccordement de câbles (17a, 17b).

7. Disjoncteur à déclenchement thermique (1) selon l'une des revendications 1 à 6,
**caractérisé en ce que** le mécanisme de commutation (6) comporte un élément bimétallique (7) qui porte un contact mobile (8b) à son extrémité libre et un point de contact de commutation (8) ainsi qu'un élément chauffant (9) sous forme de résistance PTC, qui repose sur l'élément bimétallique (7) et est supporté au moyen d'un élément élastique (10) sur un bras de contact fixe (11) qui porte un contact fixe (8a) formant le point de contact de commutation (8) avec le contact mobile (8b).
